# FASCICULE DE BREVET EUROPEEN

(11) **EP 2 593 339 B1**
(45) Date de publication et mention de la délivrance du brevet: **14.09.2016**
(21) Numéro de dépôt: 11735419.1
(22) Date de dépôt: 12.07.2011
(51) Int. Cl.: B60R 25/20, B60R 25/021

(54) **ROTOR DE VERROU COMPRENANT UN PALPEUR DE PRÉSENCE D'UNE CLÉ**
ROTOR FÜR EIN SCHLOSS MIT EINEM SCHLÜSSELPRÄSENZSENSOR
ROTOR FOR A LOCK INCLUDING A KEY PRESENCE SENSOR

(30) Priorité: 13.07.2010 FR 1002964
(43) Date de publication de la demande: 22.05.2013
(73) Titulaire: U-Shin France SAS, 94046 Créteil Cedex (FR)
(72) Inventeur: MALTAVERNE, Frédéric, F-94046 Creteil Cedex (FR); PERRIN, Christophe, F-58160 Imphy (FR)
(74) Mandataire: Gaillarde, Frédéric F. Ch.
(86) Numéro de dépôt international: PCT/EP2011/061890
(87) Numéro de publication internationale: WO 2012/007480

(56) Documents cités:
- FR-A1- 2 216 149
- JP-A- S5 931 369
- JP-A- 58 191 654
- US-A1- 2004 129 041

## Description

L'invention concerne les rotors de verrou, notamment pour les dispositifs de blocage de direction de véhicule.

Le document EP-1 894 796 divulgue un rotor de verrou à barillet rotatif pour un dispositif antivol de direction de véhicule. Le verrou est doté de moyens de verrouillage à même de bloquer le mouvement du rotor et interdisant donc de démarrer le véhicule. Le déblocage s'effectue au moyen d'une clé insérée dans un logement. Le verrou comprend en outre un palpeur apte à détecter la présence d'une clé dans le logement afin, le cas échéant, de commander le déverrouillage de certaines mobilités de la colonne de direction du véhicule.

Le palpeur est monté mobile autour d'un axe orthogonal à la direction de l'insertion de la clé dans le logement. Cet agencement donne au palpeur une trajectoire qui s'avère, dans certains cas, difficilement compatible avec les autres parties de la colonne de direction, notamment celles qui doivent coopérer avec le palpeur pour la désactivation du mécanisme de blocage de la colonne.

Le document JP-58-191654 montre un système d'accord au preambule de la revendication 1.

Un but de l'invention est de fournir un rotor dont la configuration soit davantage compatible avec certains environnements.

A cet effet, on prévoit, selon l'invention, un rotor de verrou qui présente un logement et comprend un palpeur de détection de la présence d'une clé dans le logement, le palpeur étant monté mobile par rapport au logement autour d'un axe parallèle à une direction d'insertion de la clé dans le logement.

Selon l'invention, le palpeur présente une face de rampe s'étendant en regard du logement.

Ainsi, le palpeur peut facilement coopérer avec certains types d'environnements du verrou. C'est le cas, notamment, lorsque le palpeur est destiné à actionner un commutateur coulissant dans un plan perpendiculaire à la direction d'insertion de la clé. L'invention est en particulier avantageuse lorsque la direction de coulissement du commutateur n'est pas perpendiculaire à une face de la clé et du logement mais intercepte au contraire une arête de ceux-ci. Le rotor de l'invention peut facilement être intégré à un environnement présentant cette caractéristique, ce qui n'est pas le cas de nombreux rotors de l'art antérieur.

Avantageusement, l'axe s'étend à distance du logement.

Ainsi, on facilite l'intégration du palpeur dans le rotor ainsi que son montage dans ce dernier.

Cette face permet l'actionnement du palpeur par la clé lors de son insertion dans le logement.

On prévoit également, selon l'invention, un verrou qui comprend un rotor selon l'invention.

De préférence, le verrou comprend un commutateur apte à être déplacé par le palpeur.

Avantageusement, le commutateur est monté mobile dans un plan perpendiculaire à la direction d'insertion.

Avantageusement, le logement présente des faces et le commutateur est monté coulissant suivant une direction non perpendiculaire aux faces du logement.

De préférence, le palpeur présente une face de rampe agencée pour être parcourue par le commutateur.

Avantageusement, le verrou forme un verrou d'antivol de véhicule.

On prévoit enfin, selon l'invention, un dispositif de blocage de direction de véhicule qui comprend un rotor selon l'invention ou un verrou selon l'invention.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue en coupe schématique d'un verrou selon l'invention montrant le positionnement du commutateur par rapport au logement de clé ;
- les figures 2 et 3 sont des vues en perspective d'une partie du verrou de la figure 1 montrant la position des pièces avant le début du mouvement du palpeur lors de l'insertion de la clé ;
- la figure 4 est une vue analogue à la figure 3 montrant la fin du mouvement du palper; et
- la figure 5 est une vue illustrant une position du palpeur lors dé son montage dans le verrou.

Le verrou 2 illustré sur les figures est destiné à équiper un dispositif antivol de colonne de direction de véhicule automobile. Il s'agit d'un verrou à barillet rotatif. Le verrou comprend un stator 4 destiné à être fixé rigidement à la colonne de direction, et un rotor 6 monté mobile à rotation dans le stator autour d'un axe central 8 de ce dernier.

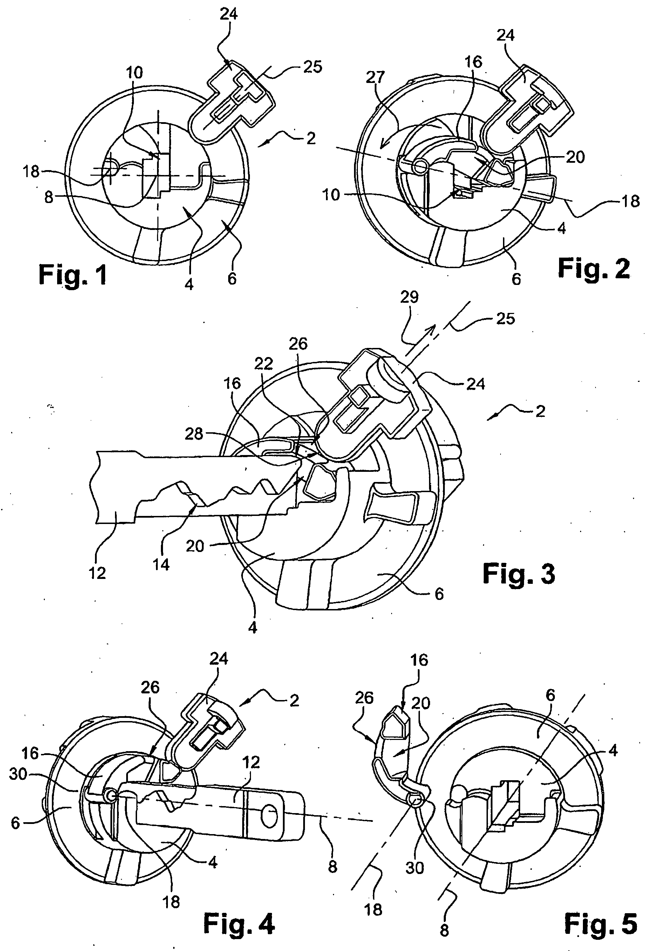

Le rotor 6 présente en son centre un logement 10 dans lequel s'étend géométriquement l'axe 8. Le logement 10 présente en l'espèce quatre faces principales, chacune de forme générale plane, lui donnant, en section dans un plan perpendiculaire à l'axe 8, comme illustré à la figure 1, une forme générale rectangulaire.

Le dispositif comporte une clé 12 formant un insert, illustrée aux figures 3 et 4 et présentant une forme générale allongée et profilée dont la section transversale, de forme générale rectangulaire, forme une partie mâle complémentaire de celle, femelle, du logement 10. La clé est prévue pour être insérée dans le logement par un mouvement de coulissement suivant la direction de l'axe 8.

Le verrou 2 comprend des moyens non représentés en détail et connus en eux-mêmes, destinés à bloquer la rotation du rotor 6 par rapport au stator 4 lorsque la clé est absente. Il s'agit, par exemple, de paillettes montées mobiles à coulissement par rapport à un corps du rotor, dans ce dernier, suivant une direction perpendiculaire à l'axe 8 et venant en prise avec le stator pour empêcher la rotation du rotor lorsque la clé est absente. Lorsque la clé se trouve insérée en position de déverrouillage dans le logement, les paillettes viennent en appui contre des reliefs et des cavités 14 de la clé pour prendre une position dans laquelle elles permettent la rotation du rotor 6 par rapport au stator 4. Cette rotation entraîne, par exemple, la mise sous tension du véhicule, l'activation des moyens de commande de ce dernier et son démarrage.

Le verrou 2 comprend, en outre, un palpeur 16 servant à détecter l'insertion de la clé en position de déverrouillage dans le logement 10. Le palpeur 16 est monté mobile à rotation par une de ses extrémités par rapport au corps du rotor 6 autour d'un axe de rotation 18 parallèle à l'axe 8. Le palpeur est donc mobile dans un plan perpendiculaire à ces axes. Le palpeur a, en l'espèce, une forme générale en arc de cercle et est positionné de sorte que le centre de courbure de l'arc de cercle et le logement 10 se trouvent du même côté du palpeur.

Le palpeur 16 présente une face de rampe interne 20 pour la clé. Cette face s'étend en partie dans le logement 10 lorsque le palpeur occupe sa position de repos illustrée aux figures 2 et 3. Cette face s'étend alors dans là trajectoire de la clé de sorte que la partie supérieure de l'extrémité distale 22 de la clé vient en contact avec cette face lors de l'insertion de la clé dans le logement. La face 20 est orientée vers l'intérieur du logement et vers son extrémité servant d'ouverture d'introduction dans le logement. Cette face de rampe est configurée de sorte que le mouvement de la clé sur cette face engendre le mouvement du palpeur autour de l'axe 18 et l'éloigne du logement pour faire passer le palpeur de la position de repos à la position activée illustrée à la figure 4.

Le dispositif comprend, en outre, un commutateur 24 monté mobile par rapport au stator 4, en l'espèce dans un plan perpendiculaire à l'axe 8. Dans le présent exemple, le commutateur 24 est monté coulissant suivant une direction 25 orthogonale aux axes 8 et 18 et qui est ici non perpendiculaire à chacune des faces de la clé et du logement comme le montre notamment la figure 1. Le commutateur 24 est plus proche de l'axe 8 en position de repos qu'en position d'activation. Il est rappelé en position de repos par un ressort non illustré.

Le palpeur 16 présente une face de rampe externe 26 pour le commutateur 24. Ce dernier vient en appui sur la face 26 par son extrémité proximale 28 qui présente une forme arrondie, en l'espèce, une forme cylindrique. Les génératrices de cette face sont parallèles à l'axe 8. La face de rampe 26 présente des génératrices s'étendant suivant la même direction. Elle présente ici un tronçon cylindrique agencée pour éloigner le commutateur de l'axe 8 lorsqu'il parcourt cette face. Ces deux faces 26, 28 ont des convexités orientées en sens opposés. Le passage du palpeur de la position de repos à la position d'activation a donc pour effet d'éloigner le commutateur de l'axe 8.

Le dispositif antivol est agencé de sorte que le passage du commutateur 24 en position d'activation désactive des moyens de verrouillage de certains degrés de mobilité de la colonne de direction du véhicule, connus par ailleurs. Au contraire, ces moyens se trouvent activés tant que le commutateur 24 occupe sa position de repos, c'est-à-dire tant que la clé est absente.

Le verrou fonctionne comme suit.

Avant l'introduction de la clé, comme illustré aux figures 2 et 3, le verrou est en position de repos. Le palpeur 16 s'étend dans le logement 10 dans la trajectoire de la clé et le commutateur 24 est dans la position de repos. Les moyens de verrouillage de la mobilité de la colonne de direction sont actifs et limitent donc cette mobilité. Par ailleurs, le rotor 6 est immobilisé en rotation par rapport au stator 4 grâce aux paillettes. Le véhicule est éteint.

Lorsqu'on introduit la clé 12 dans le, logement 10, son extrémité 22 vient en contact avec la rampe interne 20 du palpeur comme illustré à la figure 3. La suite du coulissement de la clé au cours de son insertion dans le logement produit par effet de rampe la rotation du palpeur 16 suivant la direction antihoraire de la flèche 27 sur la figure 2. Cette rotation produit elle-même, par effet de rampe sur la face 26, le coulissement du commutateur 24 suivant la direction 25 dans le sens de la flèche 29, ce qui désactive les moyens de blocage de la colonne.

Une fois la clé en position de déverrouillage, les paillettes autorisent la rotation du rotor par rapport au stator. L'utilisateur fait donc tourner le rotor et la clé pour démarrer le véhicule.

On observe que l'invention donne une grande liberté pour positionner le palpeur 16 et le commutateur 24 par rapport au logement 10. En particulier, il n'est pas nécessaire que le commutateur soit mobile suivant une direction perpendiculaire à l'une des faces du logement et de la clé. Ainsi, le verrou fonctionne convenablement même dans ce cas où le commutateur s'étend au droit d'une arête du logement et de la de comme illustré à la figure 1.

On assemble ici le palpeur au rotor au moyen d'un montage par baïonnette. Ce montage est matérialisé par un ou deux doigts 30 définissant à l'extrémité du palpeur l'axe de rotation 18 et coopérant avec des cavités de réception prévues dans le corps du rotor. Pour le montage, on effectue l'assemblage des doigts dans les cavités avec le palpeur en position écartée comme illustré à la figure 5, puis on rabat le palpeur dans sa position de repos.

On pourrait prévoir aussi que le palpeur est encliqueté dans le rotor, ou encore simplement posé sur une des pièces de ce dernier pourvu que le rotor une fois assemblé donne au palpeur une cinématique de rotation comme décrit plus haut.

Bien entendu, on pourra apporter à l'invention de nombreuses modifications sans sortir du cadre de celle-ci.

## Revendications

1. Rotor (4) de verrou (2) présentant un logement (10) et comprenant un palpeur (16) de détection de la présence d'une clé (12) dans le logement, le palpeur étant monté mobile par rapport au logement autour d'un axe (18) parallèle à une direction (8) d'insertion de la clé dans le logement, **caractérisé en ce que** le palpeur présente une face de rampe (20) s'étendant en regard du logement (10).

2. Rotor selon la revendication précédente dans lequel l'axe (18) s'étend à distance du logement (10).

3. Verrou (2) **caractérisé en ce qu'**il comprend un rotor (4) selon au moins l'une quelconque des revendications précédentes.

4. Verrou selon la revendication précédente qui comprend un commutateur (24) apte à être déplacé par le palpeur (16).

5. Verrou selon au moins l'une quelconque des revendications 3 ou 4 dans lequel le commutateur (24) est monté mobile dans un plan perpendiculaire à la direction d'insertion (8).

6. Verrou selon au moins l'une quelconque des revendications 3 à 5 dans lequel le logement (10) présente des faces et le commutateur (24) est monté coulissant suivant une direction (25) non perpendiculaire aux faces du logement.

7. Verrou selon au moins l'une quelconque des revendications 3 à 6 dans lequel le palpeur (16) présente une face de rampe (26) agencée pour être parcourue par le commutateur (24).

8. Verrou selon au moins l'une quelconque des revendications 3 à 7 qui forme un verrou d'antivol de véhicule.

9. Dispositif de blocage de direction de véhicule, **caractérisé en ce qu'**il comprend un rotor (4) selon au moins l'une quelconque des revendications 1 à 2 ou un verrou (2) selon au moins l'une quelconque des revendications 3 à 8.

## Patentansprüche

1. Rotor (4) des Bolzens (2) mit einem Gehäuse (10) und mit einem Fühler (16) für das Vorhandensein eines Schlüssel Erfassen (12) in dem Gehäuse, wobei die Sonde relativ zu dem Gehäuse montiert ist rund eine Achse (18) parallel zu einer Richtung (8) des Einführung des Schlüssels in den Schlitz, **dadurch gekennzeichnet, dass** der Fühler eine Rampenfläche (20) gegenüber dem Gehäuse (10) erstreckt.

2. Rotor nach dem vorhergehenden Anspruch, wobei die Achse (18) erstreckt sich von dem Gehäuse (10) weg.

3. Schloß (2), **dadurch gekennzeichnet, daß** sie einen Rotor umfaßt (4) nach mindestens einem der vorhergehenden Ansprüche.

4. Schloß nach dem vorhergehenden Anspruch, die durch den Taststift verschoben einen Schalter (24) in der Lage (16) aufweist.

5. Schloß nach mindestens einem der Ansprüche 3 oder 4, wobei der Schalter (24) beweglich in einer Ebene montiert senkrecht zur Einschubrichtung (8).

6. Schloß nach mindestens einem der Ansprüche 3 bis 5, wobei das Gehäuse (10) Seite und der Schalter (24) verschiebbar in einer Richtung (25) nicht senkrecht zu den Flächen des Gehäuses befestigt.

7. Schloß nach mindestens einem der Ansprüche 3 bis 6, wobei der Fühler (16) eine Rampenfläche (26) angeordnet ist durch den Schalter zu fahr (24).

8. Schloß nach mindestens einem der Ansprüche 3 bis 7, die eine Diebstahlsicherung Fahrzeugs bildet.

9. Fahrzeuglenksperre , **dadurch gekennzeichnet, daß** sie einen Rotor (4) nach mindestens einem der Ansprüche 1 bis 2 oder einer Klinke (2) nach wenigstens einem der Ansprüche 3 bis 8 umfasst.

## Claims

1. Rotor (4) of bolt (2) having a housing (10) and comprising a feeler (16) for detecting the presence of a key (12) in the housing, the probe being mounted movable relative to the housing around an axis (18) parallel to a direction (8) of insertion of the key into the slot, **characterized in that** the feeler has a ramp face (20) extending opposite the housing (10).

2. Rotor according to the preceding claim wherein the axis (18) extends away from the housing (10).

3. Lock (2) **characterized in that** it comprises a rotor (4) according to at least one of the preceding claims.

4. Lock according to the preceding claim which comprises a switch (24) capable of being displaced by the feeler (16).

5. Lock according to at least one of claims 3 or 4 wherein the switch (24) is movably mounted in a plane perpendicular to the insertion direction (8).

6. Lock according to at least any one of claims 3 to 5 wherein the housing (10) has side and the switch (24) is slidably mounted in a direction (25) non-perpendicular to the faces of the housing.

7. Lock according to at least any one of claims 3 to 6 wherein the feeler (16) has a ramp face (26) arranged to be traveled by the switch (24).

8. Lock according to at least any one of claims 3 to 7 which forms an anti-theft lock vehicle.

9. A vehicle steering lock, **characterized in that** it comprises a rotor (4) according to at least one of claims 1 to 2 or a latch (2) according to at least any one of claims 3 to 8.
